# FASCICULE DE BREVET EUROPEEN

(11) **EP 1 227 640 B1**
(45) Date de publication et mention de la délivrance du brevet: **07.03.2007**
(21) Numéro de dépôt: 02290131.8
(22) Date de dépôt: 18.01.2002
(51) Int. Cl.: H04L 29/06

(54) **Procédé et système de communication d'un certificat entre un module de sécurisation et un serveur**
Verfahren und System zur Übertragung eines Zertifikats zwischen einem Sicherheitsmodul und einem Server
Method and system for communicating a certificate between a security module and a server

(30) Priorité: 24.01.2001 FR 0100946
(43) Date de publication de la demande: 31.07.2002
(73) Titulaire: BULL S.A., 78430 Louveciennes (FR)
(72) Inventeur: Maurin, Joël, 91370 Verrières le Buisson (FR); Martin, René, 91440 Bures sur Yvette (FR); Dujonc, Jean-Yves, 78580 Maule (FR)

(56) Documents cités:
- WO-A-00/00879
- WO-A-01/03398

## Description

La présente invention concerne le domaine des communications client-serveur sécurisées d'un système informatique et plus particulièrement un procédé et un dispositif de communication à une machine serveur d'un certificat provenant d'une machine client via un module de sécurisation.

### L'art antérieur

Le protocole HTTP (Protocole de Transfert HyperTexte - HyperText Transfer Protocol) est un protocole de communication de niveau applicatif. Le protocole HTTP est utilisé entre un client et un serveur pour transmettre et recevoir des données dans des requêtes sans gestion d'état : chaque requête est exécutée indépendamment l'une de l'autre sans connaissance des requêtes précédentes. Le protocole HTTP ne prévoit aucun chiffrement. De plus, les mécanismes d'authentification mutuelle proposés par le protocole HTTP ne présentent aucune garantie. L'authentification est une procédure permettant d'obtenir et de vérifier l'identité d'un interlocuteur émettant des requêtes HTTP.

Pour répondre au problème d'absence de chiffrement et d'authentification dans le protocole HTTP, les systèmes actuels utilisent des protocoles de sécurisation tels que le protocole SSL (Couche de connecteurs logiciels sécurisés - Secure Sockets Layer). Le protocole SSL permet de transmettre des documents de manière sécurisée via le réseau de la toile. D'autres protocoles de sécurisation apparaissent tels que le protocole TLS (Sécurité de la couche transport - Transport Layer Security) qui est une extension du protocole SSL. Les protocoles de sécurisation tels que SSL ou TLS permettent de chiffrer les échanges et d'authentifier les interlocuteurs, dans le cas présent le client et le serveur: ils offrent des services d'authentification, d'intégrité et de confidentialité.

Les protocoles de sécurisation tels que SSL et TLS utilisent des méthodes d'authentification fortes basées sur des méthodes cryptographiques à clefs publiques. Chaque interlocuteur possède une paire de clés asymétriques, appelées clés publique/privée : la clé utilisée pour chiffrer l'information est différente de celle utilisée pour la déchiffrer.

Les méthodes cryptographiques à clefs publiques utilisent un certificat qui permet de vérifier qu'une clé publique donnée est effectivement associée au détenteur légitime et que c'est bien lui qui l'utilise. Un certificat est un document numérique attestant de la propriété d'une clé publique par une personne. Un tel certificat doit être émis par une institution reconnue extérieure au système sécurisé, appelée autorité de certification (CA). Le certificat permet de prouver l'authenticité de la clé publique d'un utilisateur et donc d'authentifier celui-ci sans ambiguïté. Lorsqu'une personne signe et émet un document, le destinataire obtient le certificat de la personne émettrice. Le destinataire peut vérifier la véracité du certificat avec le certificat de l'autorité de certification ; il peut ensuite contrôler la signature de l'émetteur.

Le module de gestion du protocole SSL au niveau du serveur se trouve intégré au serveur ou à une machine intermédiaire appelée boîtier de sécurisation ou frontal. Le boîtier de sécurisation est une machine en coupure de ligne en amont du serveur. Le boîtier de sécurisation traite le protocole SSL. Le protocole SSL n'est pas implémenté entre le boîtier de sécurisation et le serveur. Le chiffrement et l'authentification s'exécutent entre le client et le boîtier de sécurisation. Le boîtier de sécurisation authentifie de manière optionnelle le client notamment au travers d'un certificat.

Le problème posé par la présente invention est l'absence dans le protocole HTTP de moyens permettant de remonter ledit certificat du boîtier de sécurisation au serveur.

Or, le certificat contient des informations susceptibles d'être très utiles pour le serveur telles que par exemple l'identité réelle du client.

Un but de la présente invention consiste à pallier le problème d'absence de moyens de communication de certificat entre le boîtier de sécurisation et le serveur.

### Résumé de l'invention

Dans ce contexte, la présente invention propose un procédé de communication selon la revendication 1.

La présente invention concerne également le système de mise en oeuvre dudit procédé selon la revendication 7, le programme mettant en oeuvre ledit procédé selon la revendication 8 et la machine de sécurisation selon la revendication 6.

### Présentation des figures

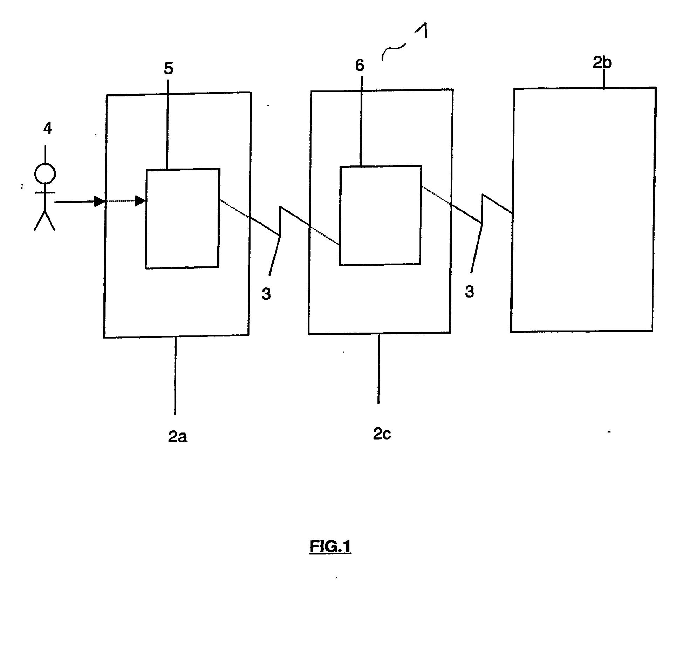

D'autres caractéristiques et avantages de l'invention apparaîtront à la lumière de la description qui suit, donnée à titre d'exemple illustratif et non limitatif de la présente invention, en référence au dessin annexé dans lequel la figure 1 est une vue schématique d'une forme de réalisation du système selon l'invention.

### Description d'une forme de réalisation de l'invention

Comme le montre la figure 1, le système 1 est distribué et composé de machines 2a, 2b, 2c organisées en un ou plusieurs réseaux 3. Une machine 2 est une unité conceptuelle très large, de nature matérielle et logicielle. Les machines peuvent être très diverses, telles que par exemple des stations de travail, serveurs, routeurs, machines spécialisées, téléphones ou passerelles entre machines. Seuls les composants des machines 2 du système 1 caractéristiques de la présente invention seront décrits, les autres composants étant connus de l'homme du métier. Le réseau 3 est entendu au sens large à savoir tout moyen de communication entre machines.

Comme le montre la figure 1, dans la présente invention, le système est un système informatique 1 comprenant une machine 2a dite machine client associée à une entité appelante 4, dans le présent exemple, un utilisateur 4, une machine 2b dite machine serveur apte à répondre aux requêtes dudit utilisateur 4. L'utilisateur 4 est susceptible d'être une personne physique, une machine, un module logiciel ou autre. L'utilisateur est compris dans la machine 2a client ou est extérieur à celle-ci (cas de la figure 1).

Dans la forme de réalisation illustrée, la machine 2a client comporte un navigateur 5 et la machine 2b serveur se présente sous la forme d'un serveur.

Le système 1 comprend un module 2c de sécurisation qui sera décrit plus loin.

Le protocole de communication entre la machine 2a client et la machine 2b serveur est le protocole HTTP ou tout protocole équivalent. Un protocole équivalent au protocole HTTP est un protocole qui implémente le transport de témoins (appelés dans le langage courant informatique cookies comme il sera vu plus loin).

Le protocole HTTP définit une structure pour les messages transmis dans le sens client → serveur et une structure pour les messages dans le sens serveur → client. Chacun des messages comprend une ligne de début (en anglais start-line), suivie d'un nombre quelconque d'en-têtes, une ligne vide et le corps du message. Les en-têtes permettent à la machine 2a client de transmettre à la machine 2b serveur des informations relatives à un message HTTP ou à l'utilisateur 4 ou inversement à la machine 2b serveur de transmettre à la machine 2a client des informations relatives à un message HTTP ou à la machine 2b serveur. Des en-têtes sont définis dans le protocole HTTP mais il est possible d'en créer à titre provisoire ou expérimental.

Un en-tête est composé d'un nom unique suivi de « : » et de la valeur du champ. Les différents en-têtes sont séparés entre eux par un retour chariot « CRLF » (Carriage Return Line Feed).

Le message HTTP suivant sera utilisé à titre d'exemple :

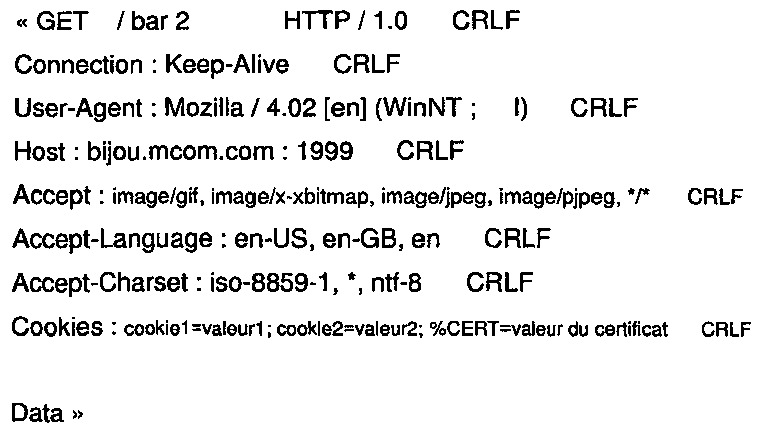

L'expression « GET / bar 2 HTTP / 1.0 CRLF » correspond à la ligne de début. Les expressions « Connection, User-Agent, Host, Accept, Accept-Language, Accept-Charset, Cookies » correspondent aux en-têtes du message HTTP. Les en-têtes sont composées d'un nom unique « Cookies » suivi de « : » et de la valeur du champ «cookie1=valeur1; cookie2=valeur2; %CERT=valeur du certificat ». L'expression « Data » correspond au corps du message.

Dans les communications entre client et serveur, un mécanisme de témoin appelé dans le langage courant informatique cookie est de plus en plus utilisé.

Le témoin est une information envoyée par une machine 2b serveur, stockée du côté d'une machine 2a client dans une communication client/serveur et retrouvée par ladite machine 2b serveur lors d'une utilisation ultérieure.

Lorsqu'une entité appelante et plus précisément un utilisateur 4 se connecte à un site du réseau de la toile, des informations sur l'utilisateur 4 sont collectées dans un témoin par la machine 2b serveur et envoyées au navigateur de la machine 2a client qui les stocke pour une utilisation ultérieure. Les témoins sont véhiculés dans les en-têtes des messages HTTP.

Dans l'exemple du message HTTP illustré, les témoins sont véhiculés dans l'en-tête intitulé « Cookies ». Le message comprend trois témoins « Cookie1 », « Cookie2 » et « %CERT » dont les valeurs respectives « valeur1 », « valeur2 », « valeur du certificat » sont données après les signes « = ».

Lorsque l'utilisateur se connecte à nouveau sur le site en question, le navigateur 5 envoie le témoin correspondant à la machine 2b serveur dans un en-tête de requête HTTP. La machine 2b serveur utilise les informations du témoin pour se configurer en fonction de l'utilisateur 4 qui l'appelle. Les informations en question sont par exemple une information personnelle dudit utilisateur 4 telle qu'un identifiant unique, une réponse à un questionnaire que l'utilisateur 4 a rempli sur le site visité, une date et une heure à laquelle certaines pages ont été lues... Généralement, un témoin enregistre les préférences de l'utilisateur 4 lorsqu'il utilise un site donné afin de préparer des pages personnalisées lorsqu'il se connecte à nouveau audit site. Le mécanisme de témoin permet également de changer les encarts publicitaires notamment lors d'une succession de pages requises, voire de les adapter à l'utilisateur 4 concerné ou encore de réaliser des statistiques.

Le protocole SSL est implémenté entre la machine 2a client et le module 2c de sécurisation pour sécuriser les communications entre client et serveur.

Dans une connexion SSL entre un client et un serveur, le client possède de manière optionnelle un certificat de manière à être authentifié. Le certificat délivré par une autorité de certification est un moyen reconnu de présenter son identité ainsi que d'autres informations liées au détenteur du certificat (son identité, son nom unique, sa clé publique et l'algorithme de chiffrement lié ...), aux spécifications de ce certificat (sa version, son numéro de série unique, sa période de validité ...), et à l'autorité de certification qui l'a délivré (son identité, son nom unique, sa signature et l'algorithme utilisé pour signer ...). La signature d'un certificat est un condensé du nom unique du détenteur dudit certificat et de la clé publique dudit détenteur, chiffré avec la clé privée de l'autorité de certification. Chaque certificat a donc sa propre signature ce qui permet de garantir l'authentification. Un utilisateur authentifie la clé publique d'un autre utilisateur simplement en déchiffrant la signature du certificat avec la clé publique de l'autorité de certification.

Dans le système 1, le module 2c de sécurisation gère un protocole de sécurisation. Le module 2c de sécurisation se présente sous la forme d'une machine 2 (forme de réalisation illustrée) ou d'un module logiciel intégré à une machine 2 telle que la machine 2b serveur.

Selon la forme de réalisation de l'invention illustrée sur la figure 1, le module 2c de sécurisation est une machine 2 intermédiaire. Le module 2c de sécurisation appelée boîtier de sécurisation ou frontal est en rupture de ligne en amont de la machine 2b serveur.

Le module 2c de sécurisation permet la gestion d'un protocole de sécurisation tel que SSL ou TLS ou équivalent. Un protocole équivalent au protocole SSL ou TLS est un protocole permettant l'authentification de l'utilisateur 4 au moyen de certificat. Le module 2c de sécurisation permet la transmission de certificat de la machine 2a client vers la machine 2b serveur.

Le module 2c de sécurisation comprend des moyens 6 d'analyse permettant de requérir un certificat de l'utilisateur 4 auprès de la machine 2a client, de récupérer le certificat de l'utilisateur 4 requis auprès de la machine 2a client et de l'envoyer à la machine 2b serveur. Dans la forme de réalisation illustrée, les moyens 6 d'analyse se présentent sous la forme d'un module logiciel intégré au module 2c de sécurisation.

Le certificat de la machine 2a client requis par la machine 2b serveur lors de l'authentification mutuelle du protocole SSL est transmis de la machine 2a client au module 2c de sécurisation. Le protocole SSL n'étant pas implémenté entre le module 2c de sécurisation et la machine 2b serveur et le protocole HTTP ne permettant pas de transmettre des certificats, le certificat contenant des informations précieuses est bloqué au niveau du module 2c de sécurisation. La présente invention consiste à transmettre le certificat du module 2c de sécurisation à la machine 2b serveur dans un en-tête de témoin des requêtes HTTP.

L'information constituée par le certificat n'est pas une information destinée à constituer un témoin. Le certificat ne provient pas de la machine 2b serveur et n'est pas stockée par la machine 2a client. Cependant, un des buts initiaux du témoin demeure à savoir véhiculer des informations concernant l'émetteur d'une requête HTTP.

La machine 2b serveur bénéficie ainsi des informations contenues dans le certificat telles que :
■ la clé publique ;
■ le nom du propriétaire ;
■ la date d'expiration du certificat ;
■ le nom de l'autorité de certification ;
■ le numéro de série du certificat ;
■ la signature de l'autorité de certification.

Le transport de certificat au moyen d'en-tête de témoin de requêtes HTTP n'entraîne aucune modification de la machine 2b serveur. En effet, la machine 2b serveur n'analyse pas les en-têtes de témoin : elle les transmet directement à l'application concernée.

Le procédé selon la présente invention se déroule de la manière suivante.

L'utilisateur 4 demande l'accès à une page d'un site déterminé à l'aide du navigateur 5. Le navigateur 5 envoie une requête HTTP/SSL au travers du réseau 3 à la machine 2b serveur. Le navigateur 5 requiert l'adresse universelle (en anglais URL - Uniform Ressource Locator) de la page sécurisée du site en question avec le préfixe « https:// ». La requête, appelée requête d'accès, est interceptée par le module 2c de sécurisation qui traite les services de sécurisation offerts par le protocole de sécurisation utilisé à savoir dans le présent exemple le protocole SSL. Une connexion TCP est initialisée. Le dialogue commence par le protocole appelé en anglais « handshake » (poignée de main - reconnaissance mutuelle) au cours duquel s'effectue la reconnaissance mutuelle de l'utilisateur 4 et du module 2c de sécurisation et un échange de clés.

Dans les spécifications du protocole SSL, l'authentification de l'utilisateur 4 est optionnelle. Dans la présente invention, l'authentification de l'utilisateur 4 reste optionnelle : si elle est requise, les moyens 6 d'analyse du module 2c de sécurisation réclament l'envoi dans la procédure « handshake » d'un certificat par la machine 2a client. Les moyens 6 transmettent le message SSL « CertificateRequest » à la machine 2a client au travers du réseau 3.

La machine 2a client répond en transmettant au travers du réseau 3 le certificat de l'utilisateur 4 au module 2c de sécurisation. Le certificat est envoyé par la machine 2a au moyen du message SSL « Certificate ».

Le module 2c décode le message HTTP et récupère le certificat de l'utilisateur 4 s'il a été requis par le module 2c.

Le protocole handshake du protocole SSL ayant abouti, et dans le cas
où un certificat a été requis et récupéré par le module 2c lors du protocole handshake, les moyens 6 d'analyse recherchent dans la requête HTTP d'accès à la page sécurisée du site en question provenant de la machine 2a client si un en-tête de témoin existe, à savoir s'il existe un en-tête intitulé « Cookies ». Dans l'exemple illustré, l'en-tête « Cookies » est détecté. Si aucun en-tête de témoin n'est présent, les moyens d'analyse créent un en-tête de témoin.

Dans l'en-tête de témoin existante ou créée, les modules d'analyse ajoutent un témoin spécifique auquel ils attribuent par exemple un nom par défaut: dans l'exemple illustré, le témoin CERT est ajouté à l'en-tête Cookies. Le nom par défaut, dans le présent exemple le nom CERT, est un nom configurable permettant à la machine 2b serveur de distinguer ledit certificat parmi les différents témoins. Le témoin spécifique ajouté a pour valeur le certificat récupéré de l'utilisateur 4, à savoir dans l'exemple illustré « valeur du certificat ».

Dans l'exemple illustré, les moyens 6 d'analyse recherchent l'expression « CRLF Cookies : ». Une fois l'en-tête de témoin retrouvé, les moyens 6 d'analyse recherchent le signe « CRLF » pour atteindre la fin de l'en-tête de témoin. Les moyens 6 insèrent à la fin de l'en-tête témoin l'expression « %CERT=valeur du certificat CRLF ».

Les moyens 6 d'analyse suppriment du certificat, dans l'exemple « valeur du certificat », inséré dans le témoin spécifique tous les séparateurs utilisés dans les en-têtes tels que CRLF, « ; » et « , » et les remplacent par exemple par un espace. Les séparateurs sont supprimés du certificat pour éviter qu'ils soient interprétés comme constituant plusieurs témoins ou en-têtes.

Les moyens 6 d'analyse transmettent la requête HTTP d'accès contenant le certificat à la machine 2b serveur. La machine 2b serveur transmet directement les témoins reçus et en particulier le certificat à l'application concernée.

Le procédé selon l'invention consiste ainsi à récupérer le certificat de l'utilisateur transmis de la machine 2a client à la machine 2b serveur, à introduire ledit certificat dans un en-tête de témoin d'une requête HTTP d'accès et à envoyer la requête HTTP d'accès contenant ledit certificat à la machine 2b serveur.

La présente invention concerne donc un procédé de communication à la machine 2b serveur d'un certificat de l'utilisateur 4 provenant de la machine 2a client via le module 2c de sécurisation caractérisé en ce qu'il consiste à introduire ledit certificat dans un en-tête de témoin d'une requête du protocole HTTP ou équivalent provenant de la machine 2a client pour les transmettre du module 2c de sécurisation à la machine 2b serveur.

Le procédé selon l'invention consiste à retirer dudit certificat tous les séparateurs utilisés dans les en-têtes des messages HTTP avant son introduction dans un en-tête de témoin.

Le procédé consiste à rechercher, avant l'introduction dudit certificat dans un en-tête, si un en-tête de témoin est présent dans la requête HTTP provenant de la machine 2a client et dans le cas contraire, à en créer un.

Le procédé selon l'invention consiste à ajouter un témoin spécifique dans l'en-tête de témoin existante ou créée, un nom par défaut configurable étant attribué audit témoin spécifique permettant à la machine 2b serveur de distinguer le certificat parmi les témoins de la requête HTTP ou équivalent.

Le procédé consiste à transmettre à la machine 2b serveur la requête HTTP ou équivalent provenant de la machine 2a client dans laquelle a été introduit le certificat.

La présente invention concerne également la machine 2c de sécurisation permettant de sécuriser les échanges entre la machine 2a client et la machine 2b serveur, caractérisée en ce qu'elle comprend les moyens 6 d'analyse permettant la transmission du certificat dans un en-tête de témoin d'une requête HTTP ou équivalent.

La présente invention porte aussi sur le système comprenant la machine 2a client, la machine 2b serveur, le module 2c de sécurisation, caractérisé en ce que le module 2c de sécurisation comprend les moyens 6 d'analyse permettant la transmission d'un certificat provenant de la machine 2a client dans un en-tête de témoin d'une requête HTTP ou équivalent provenant de la machine 2a client.

La présente invention se rapporte également au programme intégré au module 2c de sécurisation permettant l'exécution du procédé décrit ci-dessus lorsque le programme est exécuté sur une machine.

## Revendications

1. Procédé de communication à une machine (2b) serveur d'un certificat d'un utilisateur (4) provenant d'une machine (2a) client via un module (2c) de sécurisation d'un système (1) informatique, le protocole utilisé entre la machine (2a) client et la machine (2c) serveur étant le protocole HTTP ou le protocole qui implémente le transport de témoins, un protocole de sécurisation du type SSL ou du type permettant l'authentification de l'utilisateur, étant implémenté entre la machine (2a) client et le module (2c) de sécurisation, **caractérisé en ce qu'**il consiste à introduire ledit certificat dans un en-tête de témoin d'une requête du protocole HTTP ou du protocole qui implémente le transport de témoins, pour les transmettre du module (2c) de sécurisation à la machine (2b) serveur.

2. Procédé selon la revendication 1, **caractérisé en ce qu'**il consiste à retirer dudit certificat tous les séparateurs utilisés dans les en-têtes des messages HTTP avant son introduction dans un en-tête de témoin.

3. Procédé selon l'une des revendications 1 ou 2, **caractérisé en ce qu'**il consiste à rechercher, avant l'introduction dudit certificat dans un en-tête, si un en-tête de témoin est présent dans la requête HTTP provenant de la machine (2a) client et dans le cas contraire, à en créer un.

4. Procédé selon la revendication 3, **caractérisé en ce qu'**il consiste à ajouter un témoin spécifique dans l'en-tête de témoin existante ou créée, un nom par défaut configurable étant attribué audit témoin spécifique permettant à la machine (2b) serveur de distinguer le certificat parmi les témoins de la requête HTTP ou du protocole qui implémente le transport de témoins.

5. Procédé selon l'une des revendications 1 à 4, **caractérisé en ce qu'**il consiste à transmettre à la machine (2b) serveur la requête HTTP ou du protocole qui implémente le transport de témoins, provenant de la machine (2a) client dans laquelle a été introduit le certificat.

6. Machine (2c) de sécurisation permettant de sécuriser les échanges entre une machine (2a) client et une machine (2b) serveur d'un système (1) informatique, le protocole utilisé entre la machine (2a) client et la machine (26) serveur étant le protocole HTTP ou le protocole qui implémente le transport de témoins, un protocole de sécurisation du type SSL ou du type permettant l'authentification de l'utilisateur, étant implémenté entre la machine (2a) client et ladite machine (2c) de sécurisation, **caractérisée en ce qu'**elle comprend des moyens (6) d'analyse permettant la transmission d'un certificat dans un en-tête de témoin d'une requête HTTP ou du protocole qui implémente le transport de témoins.

7. Système comprenant une machine (2a) client, une machine (2b) serveur, un module (2c) de sécurisation, le protocole utilisé entre la machine (2a) client et la machine (26) serveur étant le protocole HTTP ou le protocole qui implémente le transport de témoins, un protocole de sécurisation du type SSL ou du type qui implémente le transport de témoins, étant implémenté entre la machine (2a) client et module (2c) de sécurisation, **caractérisé en ce que** le module (2c) de sécurisation comprend des moyens (6) d'analyse permettant la transmission d'un certificat provenant de la machine (2a) client dans un en-tête de témoin d'une requête HTTP ou du protocole qui implémente le transport de témoins.

8. Programme pour l'intégration dans un module (2c) de sécurisation permettant l'exécution du procédé selon l'une des revendications 1 à 5 lorsque le programme est exécuté sur une machine.

## Claims

1. Method of communication to a server machine (2b) of a user certificate (4) from a client machine (2a) via a security module (2c) of a computer system (1), the protocol used between the client machine (2a) and the server machine (2b) being the HTTP protocol or the protocol that implements the transfer of cookies, a security protocol of the SSL-type or of a type allowing user authentication, being implemented between the client machine (2a) and the security module (2c), **characterised in that** it consists in inserting said certificate in the cookie header of a request of the HTTP protocol or the protocol that implements the transfer of cookies, to transmit them from the security module (2c) to the server machine (2b).

2. Method according to Claim 1, **characterised in that** it consists in extracting from said certificate all the separators used in the headers of HTTP messages before insertion in a cookie header.

3. Method according to one of Claims 1 or 2, **characterised in that** it consists in determining, before the insertion of said certificate in a header, whether a cookie header is present in the HTTP request originating from the client machine (2a) and if not, in creating one.

4. Method according to Claim 3, **characterised in that** it consists in adding a specific cookie to the existing or created cookie header, a name that is by default configurable being assigned to said specific cookie allowing the server machine (2b) to distinguish the certificate from the cookies of the HTTP request or the request of the protocol implementing the transfer of cookies.

5. Method according to one of Claims 1 to 4, **characterised in that** it consists in transmitting to the server machine (2b) the HTTP request or the request of a protocol that implements the transfer of cookies from the client machine (2a) into which the certificate was input.

6. Security machine (2c) securing exchanges between a client machine (2a) and a server machine (2b) of a computer system (1), the protocol used between the client machine (2a) and the server machine (2b) being the HTTP protocol or the protocol that implements the transfer of cookies, a security protocol of the SSL-type or of a type that allows user authentication, being implemented between the client machine (2a) and said security machine (2c), **characterised in that** it comprises means of analysis (6) allowing the transmission of a certificate in the cookie header of an HTTP request or of a request of the protocol that implements the transfer of cookies.

7. System comprising a client machine (2a), a server machine (2b), a security module (2c), the protocol used between the client machine (2a) and the server machine (2b) being the HTTP protocol or the protocol that implements the transfer of cookies, a security protocol of the SSL-type or of a type that implements the transfer of cookies, being implemented between the client machine (2a) and the security module (2c), **characterised in that** the security module (2c) comprises means of analysis (6) allowing the transmission of a certificate originating from the client machine (2a) in the cookie header of an HTTP request or of a request of the protocol that implements the transfer of cookies.

8. Program for integration into a security module (2c) allowing execution of the method according to one of Claims 1 to 5 when the program is executed on a machine.

## Patentansprüche

1. Verfahren zur Übertragung eines Zertifikats eines Benutzers (4), welches von einer Client-Maschine (2a) stammt, an eine Server-Maschine (2b) über ein Sicherungsmodul (2c) in einem EDV-System (1), wobei das zwischen der Client-Maschine (2a) und der Server-Maschine (2b) verwendete Protokoll das Protokoll HTTP oder das Protokoll ist, das den Transport von Zeugnissen implementiert, wobei ein Sicherungs-Protokoll vom Typ SSL oder vom die Authentifizierung des Benutzers ermöglichenden Typ zwischen der Client-Maschine (2a) und dem Sicherungsmodul (2c) implementiert wird, **dadurch gekennzeichnet, dass** es darin besteht, das genannte Zertifikat einzufügen in eine Zeugnis-Kopfzeile einer Anfrage des Protokolls HTTP oder des Protokolls, welches den Transport der Zeugnisse implementiert, um sie vom Sicherungsmodul (2c) an die Server-Maschine (2b) zu übertragen.

2. Verfahren nach Anspruch 1, **dadurch gekennzeichnet, dass** alle in den Kopfzeilen der HTTP-Nachrichten verwendeten Trennzeichen aus dem genannten Zertifikat vor seiner Einfügung in eine Zeugnis-Kopfzeile entfernt werden.

3. Verfahren nach einem der Ansprüche 1 oder 2, **dadurch gekennzeichnet, dass** vor dem Einfügen des genannten Zertifikats in eine Kopfzeile überprüft wird, ob eine Zeugnis-Kopfzeile in der von der Client-Maschine (2a) stammenden HTTP-Anfrage vorliegt, und falls nicht, eine erzeugt wird.

4. Verfahren nach Anspruch 3, **dadurch gekennzeichnet, dass** ein spezifisches Zeugnis in die existierende oder erzeugte Zeugnis-Kopfzeile hinzugefügt wird, wobei dem speziellen Zeugnis ein im Normalfall konfigurierbarer Name zugewiesen wird, der es der Server-Maschine (2b) ermöglicht, das Zertifikat unter den Zeugnissen der HTTP-Anfrage, oder der Anfrage des Protokolls, welches den Transport von Zeugnissen implementiert, zu unterscheiden.

5. Verfahren nach einem der Ansprüche 1 bis 4, **dadurch gekennzeichnet, dass** die von der Client-Maschine (2a) stammende HTTP-Anfrage, oder die Anfrage des Protokolls, welches den Transport von Zeugnissen implementiert, in die das Zertifikat eingefügt wurde, an die Server-Maschine (2b) übertragen wird.

6. Sicherungsmaschine (2c), die es ermöglicht, die Austausche zwischen einer Client-Maschine (2a) und einer Server-Maschine (2b) eines EDV-Systems (1) abzusichern, wobei das zwischen der Client-Maschine (2a) und der Server-Maschine (2b) verwendete Protokoll das Protokoll HTTP oder das Protokoll ist, welches den Transport von Zeugnissen implementiert, wobei ein Sicherungs-Protokoll vom Typ SSL oder vom die Authentifizierung des Benutzers ermöglichenden Typ zwischen der Client-Maschine (2a) und dem Sicherungsmodul (2c) implementiert wird, **dadurch gekennzeichnet, dass** sie Analysemittel (6) enthält, welche die Übertragung eines Zertifikats in einer Zeugnis-Kopfzeile einer HTTP-Anfrage oder des den Transport von Zeugnissen implementierenden Protokolls ermöglichen.

7. System, welches eine Client-Maschine (2a), eine Server-Maschine (2b), ein Sicherungsmodul (2c) einschließt, wobei das zwischen der Client-Maschine (2a) und der Server-Maschine (2b) verwendete Protokoll das Protokoll HTTP oder das Protokoll ist, welches den Transport von Zeugnissen implementiert, wobei ein Sicherungs-Protokoll vom Typ SSL oder vom Typ, das den Transport von Zeugnissen implementiert, zwischen der Client-Maschine (2a) und dem Sicherungsmodul (2c) implementiert ist, **dadurch gekennzeichnet, dass** das Sicherungsmodul (2c) Analysemittel (6) enthält, welche die Übertragung eines von der Client-Maschine (2a) stammenden Zertifikats in einer Zeugnis-Kopfzeile einer HTTP-Anfrage, oder einer Anfrage des Protokolls, welches den Transport von Zeugnissen implementiert, ermöglichen.

8. Programm zur Integration in einem Sicherungsmodul (2c). welches die Ausführung des Verfahrens nach einem der Ansprüche 1 bis 5 ermöglicht, wenn das Programm auf einer Maschine ausgeführt wird.
